# EUROPEAN PATENT APPLICATION

(11) **EP 3 196 798 A1**
(43) Date of publication of application: **26.07.2017**
(21) Application number: 17152098.4
(22) Date of filing: 19.01.2017
(51) Int. Cl.: G06F 21/62, G06F 9/54

(54) **CONTEXT-SENSITIVE COPY AND PASTE BLOCK**

(30) Priority: 19.01.2016 US 201662280435 P; 17.01.2017 US 201715407823
(71) Applicant: Secude AG, 6005 Luzern (CH)
(72) Inventor: Meier, Philipp, 6005 Luzern (CH); Lindemann, Rainer, 6333 Heunenberg See (CH)
(74) Representative: Rentsch Partner AG

(57) **Abstract**

A cut/copy action controller includes a command detector detects a cut/copy action in response to a user command; a rule applicability determiner determines, based on the source and/or destination, whether the cut/copy action satisfies a rule controlling the user action; and blocks the cut/copy action and/or the paste action in accordance with the rules. A report of the copy action may be transmitted to a log. The cut/copy action may automatically store content to an automated processor storage location such as a clipboard of a local host. A rule generator may generate a rule such that when the recurrence information indicates low recurrence of the information associated then the rule yields the blocking of the copy action.

## Description

### FIELD OF THE DISCLOSURE

The present invention relates to the field of data leak prevention and mitigation and, in particular, to copy and paste action management, control and screening.

### BACKGROUND OF THE DISCLOSURE

An organization may wish to control or to limit who may copy portions of a document, from what source such copying occurs and to where such copying is performed. In particular, employees, managers, contractors, customers and others may need to access various documents or other sources but it may be desirable to limit automatically the rights of the user to copy all or some of the document that is being used. For example, a document may include information that is sensitive and while a person, such as an employee, may be granted access to view or even to edit or to update the information contained in the document, it may be advantageous to limit or to filter, or even to prevent copying and pasting of information from the document. For example, SAP is a well-known maker of a suite of business and enterprise software known as ERP (Enterprise Resource Planning) that provides powerful tools for a range of business functions. Information contained in such documents may be sensitive and copying may need to be filtered or limited.

"Cut and paste," and "copy and paste" commands are well known. The cut command removes text or other selected information that is selected, while the copy command creates a duplicate of the text or other information selected, and in both cases the selected data is stored on a clipboard. Typically, the clipboard is a feature provided by the operating system and may be accessed by any of a number of applications running on the operating system. The clipboard may be understood as a software facility typically used for short-term data storage or data transfer. A clipboard may be part of a graphical user interface environment implemented as a data buffer and may sometimes be called a paste buffer. A clipboard can be accessed from most or all programs or applications running on a host and may involve a clipboard manager application that allows a user to work with or control functions of the clipboard. Information, such as text, copied onto a clipboard may preserve the format, typeface, meta-information or the like, about the text so as to allow data structures, for example, cells of a spreadsheet, to be stored and later copied. Other clipboard implementations may allow only clean or simple plain text.

Typically, the clipboard manager software module manages the clipboard according to a "stack" approach, such that newer cuts/copies to the clipboard replace previous cuts or copies to the clipboard and typically, make the older cuts/copies disappear. More modern clipboards allow accessing and using older cuts/copies placed on the keyboard prior to the most recent cuts/copies. A window may provide transaction history of the clipboard to allow a user to view earlier cuts/copies, or at least information about the earlier cuts/copies, and even, possibly allow the user to edit or change contents of the clipboard. Typically, contents of the clipboard are lost each time the host is rebooted. For example, clipbook viewer in the Microsoft environment allows users to view the contents of a local clipboard, and to clear the clipboard or to save contents thereof. In a Mac OSX environment, clipboard contents can be viewed using a show clipboard menu item selection from the finder menu. Also in the Mac OSX environment, a secondary, text-only clipboard, may be provided in the form of an Emacs-style kill ring, which is a stack of text strings. UNIX and LINUX systems also provide clipboard functions as part of the X Window selection or other display servers / window managers like Wayland, Mir, SurfaceSlinger or the systems specific copy & paste frameworks. Also, Mac OSX allows third party developed apps for managing and interacting with the clipboard.

Various key commands, such as X to cut, C to copy, and V to paste may also be used in addition to, or instead of, the graphical user interface (GUI) provided means of cut/copy and paste in the text following the selection of the text or other information. Typically, the clipboard is not saved in network storage. In other environments, applications may be run on remote systems and data generated thereby may travel through the host that is being used by a user. Typically, the cut/copy process happens only on the host system, and in particular, in a clipboard feature provided by the operating system. In some environments, multiple clipboards may be provided, with each clipboard being assigned a clipboard number. In addition, a clipboard history with many clips available for future pasting may also be provided, and such clips or clip history may be searched, edited or deleted. Favorite clips and frequent pastes can thus be maintained ready to be pasted with just a few clicks or keystrokes. Such cut/copy and paste commands thus offer a convenient and quick way for users to leak information.

The decision as to whether to provide access to a source (input document) and/or to a destination (output document) may be made in various ways.

Information rights management technologies that control access to documents and files and other types of content are known. Unauthorized users may be prevented from copying, sharing, viewing or editing a digital document according to the digital rights management status assigned to the document based on a document classification.

Many such document classification schemes rely on automated analysis of the content of the document of the file, or the physical location or destination of the file, for example, as reflected by the file system folder structure. Other approaches prompt a user to input a level of protection to be given to the document or an indication of the sensitivity of the document, and use such user input, alone or in combination with content analysis, to manage rights for the document.

One problem is that often a document fails to contain sufficient information for such content analysis. For example, the content may include a list of figures or values, such as a spreadsheet with numeric information, or may have a list of names. Some documents are not amenable to most automated machine reading and text search technologies because they contain images, computer aided design elements, or the like.

Thus, such a system would often leave the entire decision making of classifying the sensitivity of the document to a user who is prompted for input. This presents a large risk of erroneous classification and burdens the user with the need to enter such information when prompted. In addition, the user may not be the best person to make such decisions regarding the sensitivity of the document.

Other features and advantages of the present invention will become apparent from the following description of the invention which refers to the accompanying drawings.

### SUMMARY OF THE DISCLOSURE

Described herein are a method, system, device, non-transient processor-readable medium incorporating a program of instructions that implement the method when executed on an automated data processor system, and means for implementing the method. In such a device or system, a copy action controller includes a command detector configured to detect an automated processor-implemented copy action in response to a user command received by a computer system, the copy action comprising at least one of a cut action from a source, a copy action from the source, and a paste action to a destination; a rule applicability determiner configured to determine, based on a first information comprising at least one of the source and the destination, whether the copy action satisfies a rule controlling the user action; and an action implementer configured to perform at least one of blocking the copy action and transmitting a report of the copy action to an action log, in accordance with the rule.

In such a copy action controller, the copy action comprises both the cut or copy action of content from the source and storing of the content to an automated processor storage location. For example, the automated processor storage location may be a clipboard of a local host. The rule may be pre-set by a human system administrator.

The blocking may be include preventing storing of the content to an automated processor storage location of a local host processor and preventing storing of the content to the destination. For example, the action implementer may perform the blocking and the transmitting of the report of the copy action. The blocking may comprise preventing storing of the content to an automated processor storage of a local host processor, and the action implementer transmits, via a data network, the report of the copy action to an action log located on an automated processor remote from the local host processor. The blocking may also entail notifying a user initiating the user command of the blocking.

In such a copy action controller, the determiner may determine, based on the first information and based on second information comprising user information, whether the copy action satisfies the rule controlling the user action.

The rule applicability determiner may determine, based on the first information and based on second information comprising at least one of user location and user device location, whether the copy action satisfies the rule controlling the user action. The rule applicability determiner may determine, based on the first information and based on second information comprising content size, whether the copy action satisfies the rule controlling the user action. The rule applicability determiner may determine, based on the first information and based on second information comprising at least one of date and time information of the user command, whether the copy action satisfies the rule controlling the user action.

In such a copy action controller, the source and destination may be determined with reference to at least a portion of a file identifier or file name. The source and the destination may each be at least one of a document, a file and a website.

The copy action may also include an information analyzer configured to determine recurrence information for information associated with a plurality of learning copy actions in response to a plurality of user commands, each learning copy action comprising at least one of the cut action from the source, the copy action from the source, and the paste action to the destination; and a rule generator configured to generate the rule based on the recurrence information determined, wherein the rule applicability determiner is configured to determine whether the copy action satisfies the rule based on the rule generated. In such a copy action controller, the rule generator may generate the rule such that when the recurrence information indicates low recurrence of the information associated then the rule yields the at least one of the blocking of the copy action and the reporting of the copy action by the action implementer. A method of classifying the digital document may include: identifying, by an automated data processor, a request for access to the digital document for a first user; determining, by the automated data processor, user identifying information for the first user; obtaining, by the automated data processor, according to the user identifying information a first user characteristic comprising at least one of an organizational affiliation of the first user and a job function of the first user; generating, by the automated data processor, based on the first user characteristic, a digital document classification for the digital document; associating, by the automated data processor, the digital document classification with the digital document, by at least one of: (1) embedding the document classification in the digital document, and (2) logging the document classification in a log identifying the digital document; and making a user access determination for the digital document according to the associated digital document classification.

Such a method may further include: obtaining, by the automated data processor, application identifying information for a programming application associated with generation of the digital document; and obtaining, by the automated data processor, according to the application identifying information, function identifying information for the programming application, wherein the generating of the classification is performed according to the function identifying information.

In such a method, the obtaining of the function identifying information may further comprises determining a software grouping of the programming application.

Such a method may further include: obtaining, by the automated data processor, as a document attribute, an identification of an organizational unit associated with creation of the digital document, wherein the generating of the classification is performed according to the document attribute.

In such a method, the user characteristic may comprises an organizational affiliation of the first user.

In such a method, the user characteristic may comprises a job function of the first user.

In such a method, the user characteristic may comprises an authorization assigned to the first user.

This method may further comprise setting a rights management policy for the digital document according to the document classification.

Such a method may further include managing document access control for the digital document according to the document classification.

Such a method may further include controlling a right to share the digital document with additional users according to the document classification.

Such a method may further include managing data loss prevention for the digital document according to the document classification.

For example, the digital document may be generated using SAP software.

In such a method, the first user may be a user who created the digital document, or the first user may be a user who first edited the digital document at an organization affiliated with a user attempting to access the digital document. Or, the first user may be a user attempting to access the digital document.

Such a method may further comprise based on the classification, taking the step of one of granting and denying access, to the digital document for a user attempting to access the digital document.

Such a method may further comprise: obtaining, by the automated data processor, according to the user identifying information a second user characteristic for the first user, wherein the generating of the digital document classification is based on the first user characteristic and on the second user characteristic.

Such a method may further comprise: assigning, by the automated data processor, a reliability score to at least one of the first user characteristic and the second user characteristic; and weighting, by the automated data processor, according to the reliability score, the at least one of the first user characteristic and the second user characteristic, wherein the generating of the digital document classification is based on the weighted at least one of the first user characteristic and the second user characteristic.

In such a method, a default reliability score may be for the first user characteristic is weighted less than a second reliability score that is generated according to specific information obtained for the first user.

This method may further comprise: determining that a conflict exists between the first user characteristic and the second user characteristic for the first user; and selecting a selected score of the first user characteristic and the second user characteristic, the selected score being the score that indicates a higher level in an organizational hierarchy, wherein the generating of the digital document classification is based on the selected score.

In such a method, the first user characteristic may be obtained from a classification database data populated for the classification.

Such a method may further comprise: obtaining, by the automated data processor, from the first user a user data input indicating sensitivity of the digital document, wherein the generating of the classification is performed according to the user data input.

As discussed, also described is an automated data processing system for classifying a digital document. Such an automated data processing system may comprise: a data determiner configured to obtain user identifying information for a first user attempting to access the digital document, and to obtain, according to the user identifying information, a first user characteristic; a classification generator configured to generate, using the automated data processor, based on the first user characteristic, a digital document classification for the digital document; and a document manager configured to associate the digital document classification with the digital document, by at least one of: (1) embedding the digital document classification in the digital document, (2) logging the digital document classification in a log identifying the digital document, wherein a degree of access to the digital document for a user attempting access is determined according to the digital document classification.

Also described is a method of classifying a digital document, the method comprising: identifying, by an automated data processor, a request for access, by a first process, to the digital document; obtaining, by the automated data processor, application identifying information for a programming application associated with generation of the digital document; generating, by the automated data processor, based on the application identifying information, a digital document classification for the digital document; associating, by the automated data processor, the digital document classification with the digital document, by at least one of: (1) embedding the document classification in the digital document, and (2) logging the document classification in a log identifying the digital document; and based on the document classification, denying access to the digital document for a user attempting access to the digital document.

In such a method, the first user may be a user who created the document and the user attempting access is a user different from the first user. In such a method, the user attempting access may be the first user.

A copy action controller according to the invention comprises a command detector configured to detect an automated processor-implemented copy action in response to a user command received by a computer system. The copy action comprises at least one of a cut action from a source, a copy action from the source, and a paste action to a destination. A rule applicability determiner configured to determine, based on a first information comprises at least one of the source and the destination, whether the copy action satisfies a rule controlling the user action and an action implementer configured to perform at least one of blocking the copy action and transmitting a report of the copy action to an action log, in accordance with the rule.

In some embodiments, the copy action comprises both the cut or copy action of content from the source and storing of the content to an automated processor storage location.

In some embodiments, the automated processor storage location is a clipboard of a local host.

In some embodiments, the rule is pre-set by a human system administrator.

In some embodiments, the blocking comprises at least one of preventing storing of the content to an automated processor storage location of a local host processor and prevents storing of the content to the destination.

In some embodiments, the action implementer performs the blocking and the transmitting of the report of the copy action.

In some embodiments, the blocking comprises preventing storing of the content to an automated processor storage of a local host processor, and the action implementer transmits, via a data network, the report of the copy action to an action log located on an automated processor remote from the local host processor.

In some embodiments, the blocking further comprises notifying a user initiating the user command of the blocking.

In some embodiments, the determiner is configured to determine, based on the first information and based on second information comprising user information, whether the copy action satisfies the rule controlling the user action.

In some embodiments, the rule applicability determiner is configured to determine, based on the first information and based on second information comprising at least one of user location and user device location, whether the copy action satisfies the rule controlling the user action.

In some embodiments, the rule applicability determiner is configured to determine, based on the first information and based on second information comprising content size, whether the copy action satisfies the rule controlling the user action.

In some embodiments, the rule applicability determiner is configured to determine, based on the first information and based on second information comprising at least one of date and time information of the user command, whether the copy action satisfies the rule controlling the user action.

In some embodiments, the source and destination are determined with reference to at least a portion of a file identifier or file name.

In some embodiments, the source and the destination are each at least one of a document, a file and a website.

In some embodiments, the copy action controller further comprises an information analyzer configured to determine recurrence information for information associated with a plurality of learning copy actions in response to a plurality of user commands. Each learning copy action comprises at least one of the cut action from the source, the copy action from the source, and the paste action to the destination; and a rule generator configured to generate the rule based on the recurrence information determined, wherein the rule applicability determiner is configured to determine whether the copy action satisfies the rule based on the rule generated.

In some embodiments, the rule generator is configured to generate the rule such that when the recurrence information indicates low recurrence of the information associated then the rule yields the at least one of the blocking of the copy action and the reporting of the copy action by the action implementer.

### BRIEF DESCRIPTION OF THE DRAWINGS

The Drawings illustrate various aspects of the disclosed invention. Other aspects will be evident from the textual description, or from the combination of aspects illustrated in the figures and the textual description.
Fig. 1 is a flowchart diagram illustrating an example of a process flow provided by the cut/copy and paste filter 20, according to an aspect of the present disclosure.
Fig. 2 is an example of a screenshot providing dummy text to a user, according to an aspect of the present disclosure.
Fig. 3 is an illustration providing an example of how the cut/copy and paste filters interact with the operating system and the copy and paste command, according to an aspect of the present disclosure.
Fig. 4 is a diagram illustrating major components of the cut/copy and paste filter, according to an aspect of the present disclosure.
Fig. 5 illustrates an example of a classification data structure for which values are determined, according to an aspect of the disclosure.
Fig. 6 illustrates an example of a flowchart that shows the flow of document accessing steps that includes document classification, according to an aspect of the disclosure.
Fig. 7 illustrates an example of a flowchart that includes some major steps of the classification, according to an aspect of the disclosure.
Fig. 8 illustrates an example of a data derivation scheme used for the classification, according to an aspect of the disclosure.
Fig. 9 illustrates an example of a hierarchy of software applications.
Fig. 10 illustrates an example of components of a digital document classifier, according to an aspect of the disclosure.
Fig. 11 illustrates an example of a layout showing a relationship of an end user, a document server, a classification server and other servers, according to an aspect of the disclosure.
Fig. 12 illustrates an example of a user interface allowing a user to manage information rights management policy according to an aspect of the disclosure.
Fig. 13 illustrates an example of a process interaction diagram that includes classification, according to an aspect of the disclosure.

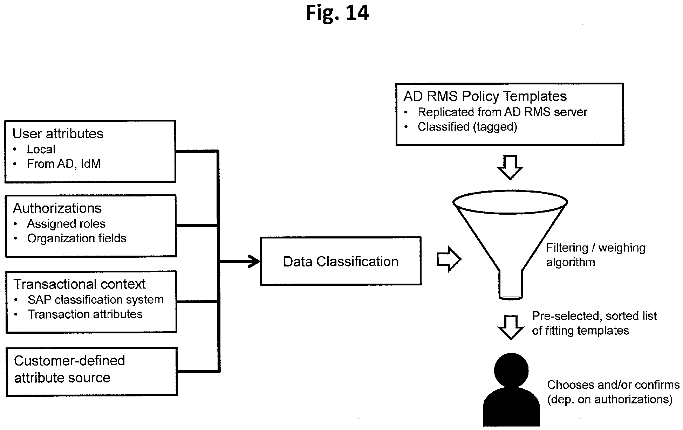

Fig. 14 illustrates an example of a conceptual approach to classification, according to an aspect of the disclosure.

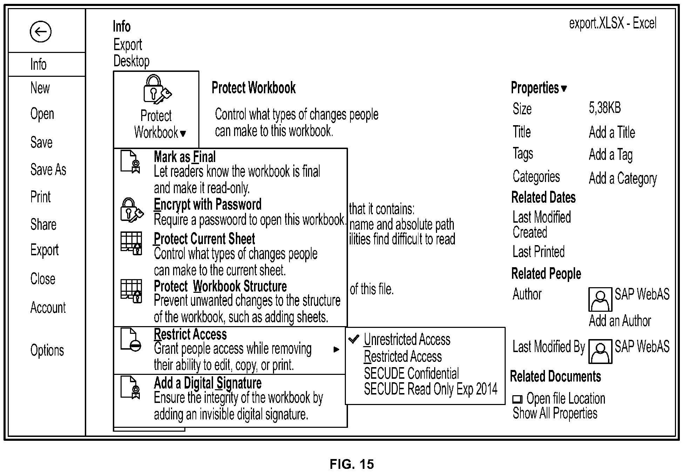

Fig. 15 illustrates an example of a related art user interface used for document rights management, according to an aspect of the disclosure.

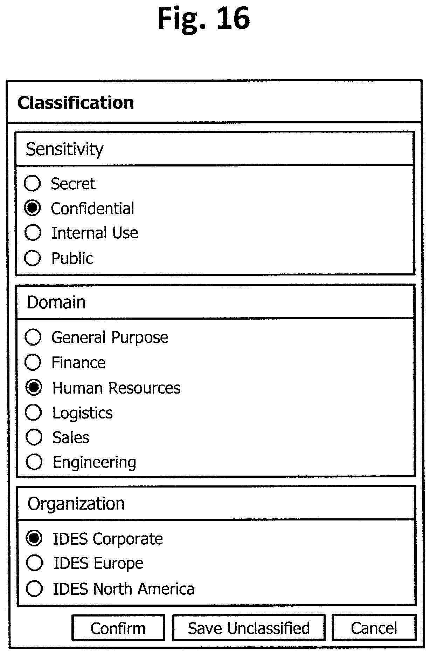

Fig. 16 illustrates an example of an interactive graphical user interface to allow a user to review, to amend or to complete information for classification data determined according to an aspect of the disclosure.
Fig. 17 illustrates examples of some rights management policies generated according to classification data determined.

### EXEMPLARY EMBODIMENTS

A system, device, software application, method non-transitory computer-readable medium incorporating a program of instructions configured to implement the method, and means for implementing the method are contemplated. A cut/copy and paste action performed by the operating system is monitored and intercepted during a user's session, and the action may be blocked, filtered, logged, archived, suppressed and/or mitigated based on various rules. Session information, user information and system specific-information may be collected to support the cut/copy and paste control decision, according to the rules. Various types of information may be captured and used as a basis for deciding whether to block and/or to report and/or to limit and/or to alter and/or to suppress an attempt to cut/copy and paste data from the clipboard. The cut/copy action or the paste action may be blocked, or a combination of the cut/copy and paste action may be blocked or controlled according to the description herein. The term cut or cut action as used herein may sometimes mean copy or copy action, and vice versa.

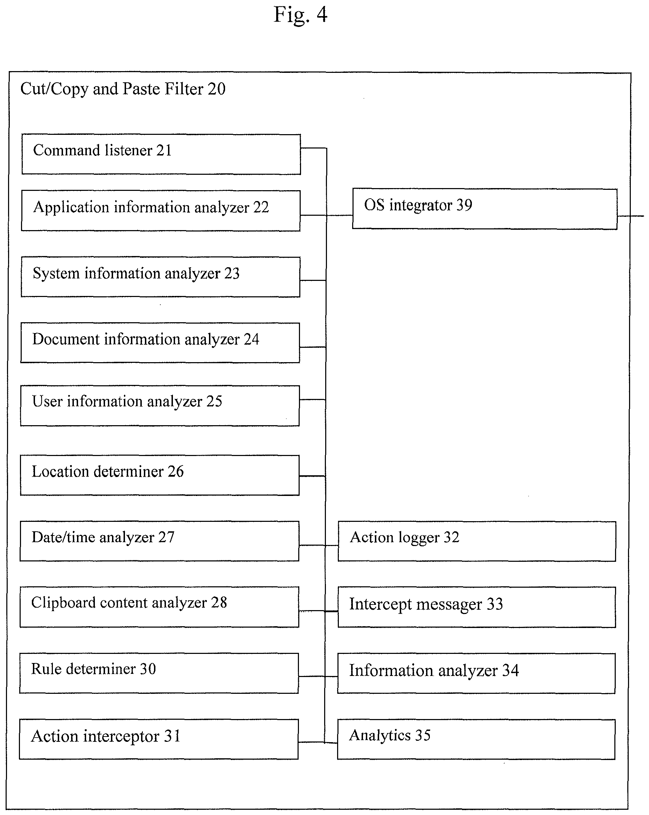

The information that the system may use as a basis for determining the control action may include:
- Device location, including, for example, the IP address, GPS location and/or date/time information of the device or host or LAN being used for the cut/copy action and/or paste action. For example, such information may be retrieved to, and analyzed by, system information analyzer 23 illustrated in Fig. 4.
- User information, for example, user name, user's e-mail address, user's organization, affiliation, group or division within the organization, seniority, clearance status, or the like. For example, such information may be retrieved to, and analyzed by, user information analyzer 25 illustrated in Fig. 4. User information, such as user's office location, user's present location. For example, such information may be retrieved to, and analyzed by, location determiner 26 illustrated in Fig. 4.
- System information, for example, operating system version, operating system type or the like. For example, such information may be retrieved to, and analyzed by, system information analyzer 23 illustrated in Fig. 4.
- Source and/or destination application information, for example, the type or version of the source application (the application that is the source for the cut/copy text or other clipboard content) and/or the type or version destination application (the application that is the destination) to which the text or other clipboard content from the clipboard is to be pasted, source and/or destination application context, application type or purpose, application installation location, the name of the executable code, that is, a compiled form of the source code of the application, for example, a file in windows ending with the .exe designation and its accompanying libraries. For example, such information may be retrieved to, and analyzed by, application information analyzer 22 illustrated in Fig. 4.
- Name or title of the source document and/or of the destination document, for example, the name or title of the source and/or destination document, source and/or destination document purpose, the electronic folder or file of the source and/or the destination document, the document type, document content, or the like (document, as used here may mean, in addition, a source/destination database, webpage, website or server, device, data stream, or the like). For example, such information may be retrieved to, and analyzed by, document information analyzer 24 illustrated in Fig. 4.
- Source and/or destination application contents such as URL, text, title, application installation location. For example, such information may be retrieved to, and analyzed by, application information analyzer 22 illustrated in Fig. 4.
- Date/time information, for example, including time zones, time and or date of the action or of the generation of a source document. For example, such information may be retrieved to, and analyzed by, date/time analyzer 27 illustrated in Fig. 4.
- Data size, number of repetitions of cut/copy from the same source document or application, amount of bytes to be copied as part of the same action, the actual content copied and the like. For example, such information may be retrieved to, and analyzed by, clipboard content analyzer 28 illustrated in Fig. 4.
- The above described information may also be enhanced by additional information dependent on certain source or destination identifiers. By way of illustration, it could be enhanced with further context and information, through additional customer specific configuration files or the like. For example: A database containing a list of application names and department units or individuals of the organization that ordinarily are expected to have access to the applications, or may copy them or that are allowed access to them or to copy them, may be provided so as to provide the basis for additional decision information.

A combination of pieces of the foregoing types of information is also contemplated. Upon detection of a person, such as an employee at an organization, attempting to cut/copy and/or paste from or to a digital document, the system can interrupt the action and based on classification of the digital document, that is either the source and/or the destination document, may make a decision as to whether to allow or to block the cut/copy and/or paste action.

For example, metadata of the environment from which the document originates or user characteristics of the user attempting to view or to download the digital document may be used to classify the document. According to such document classification generated, the system can then manage access to the digital document, or can use the classification for archiving the document, for example, selective determination of archiving locations, lifetime of the document for which the document is to be saved. The classification generated may be embedded as part of the document and/or entered in a download log for audit purposes. The classification may be used for recognizing and propagating document loss prevention (DLP)-relevant events, so as to trigger appropriate action, for example, for blocking access, and/or to generate an alert, or the like, for setting DLP functions in the network infrastructure (for example, mail systems, routers, and the like), for deriving and applying protection mechanisms, such as information rights management (IRM) or other encryption techniques, and for other such solutions, or for combinations of any two or more of the foregoing.

A context can be defined as a description of aspects of a situation. In this way, context can seem similar to cases in case-based reasoning. A context can have many aspects, typically: geographical; physical; organizational; social; task; action; technological; and time (chronological). One or more such aspects may be related to or based on a user who created the document, or a user who first edited or revised the document for the organization or organizational unit at which access to the digital document is being attempted. For example, the digital document may have been an existing document that was retrieved or rendered and first edited by a user at the organization or organizational unit where the user or attempting to access the digital document is based, and this first editing or rendering of the document within the organization or organizational unit may be of particular interest for the classification. Or, one or more such aspects may be related or based on the user who most recently revised the document, or may be related or based on the user who is attempting now to access the digital document. Therefore, relevant to the information rights management domain, the context generally encompasses predictors of the sensitivity of the content and predictors of the legitimate need and rights of an individual to access the content. These can, in part, be determined by predefined intrinsic or extrinsic rules, based on an analysis of the type of document itself or of the software used to generate it, based on an analysis of characteristics and/or identification the user, or some combinations or subcombinations of these parameters. The context can vary over time, and thus a determination of context-based access rights can change over various attempts at access.

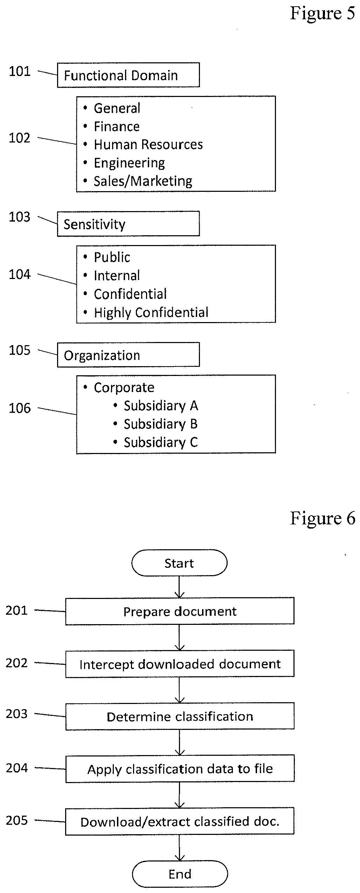

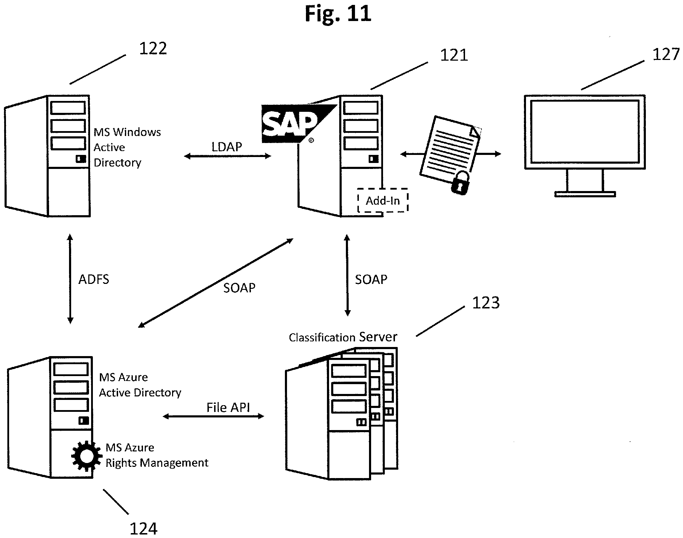

Fig. 6 is a flowchart illustrating the classification process. After system start, a user, such as at front end 127 illustrated in Fig. 11, attempts to access a digital document, such as an SAP business document from SAP server 121. Accessing a document, as described herein, may include an attempt to do one or more of the following: viewing the document on an electronic display or monitor, downloading the document to the front end 127 device of user, printing the document, copying the document, saving the document, deleting the document, renaming the document, moving the document in the filing system or to a different system or device, changing the document, encoding or decoding the document, running the document, playing or replaying the document, compiling the document, displaying the document, transmitting the document, or a combination of the foregoing.

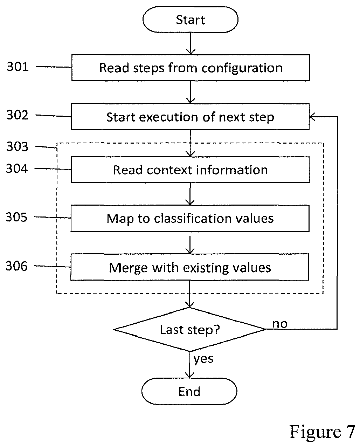

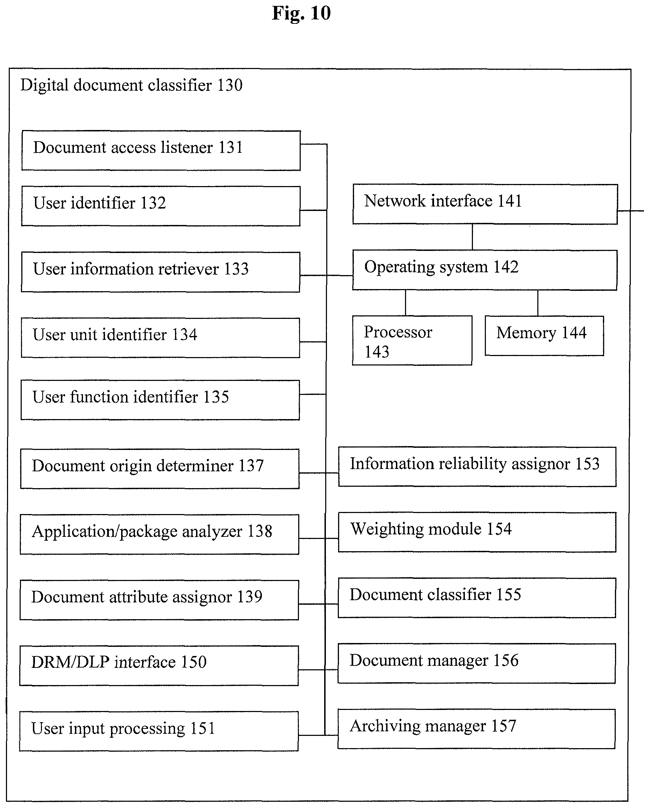

In response to this attempt to access, the document server prepares the document, as illustrated in Step 201 of Fig. 6. At Step 202, and the attempt to access is intercepted by the digital document classifier 30 illustrated in Fig. 10. The classification of the document at Step 203 in Fig. 6 is performed as shown in Fig. 7 in more detail and its accompanying description below. According to classification 1203, the classification may be applied to document at Step 204 and the document may be encrypted or otherwise protected to manage access to the document, or the archiving of the document may be automatically managed based on the classification. At Step 205, the document is downloaded or extracted or provided to the user at front end 127 in accordance with the applied classification, and the process ends.

A document, as discussed herein, may include digital or electronic documents, digital or electronic files and other data sets that convey information to a user. Such documents may include word processing or text documents, CAD files, e-mails, spreadsheet data, contacts and/or addresses, calendar entries, intranet web pages, accounting information, lists of names or lists of values, photographs, illustrations, pictures, designs, blueprints, books, video files, audio files, sheet music, software, including source code and/or object code, as well as other types of business or enterprise information and content regardless of the type of media on which they are recorded. Also, while referred to as a "document" herein, one or more electronic or digital files may together be rendered or be provided as a single document. Several examples will be discussed herein with respect to SAP-generated documents and SAP ERP, however it will be understood that any such documents are contemplated.

Managing access to the document may mean limiting or restricting a user to one or more of the following, or a combination thereof: the right to copy, to view, to print, to download, to save, to modify, to delete, to move within or outside the filing system or device, to rename, to encode, to decode, to compile, to run, to compile, to play, to replay, to display, to share, to transmit (e.g., out of a network, out of a device medium, out of a device, out of a set of devices, out of a LAN), to broadcast by the user, or to cause or to facilitate any of the foregoing.

Figure 7 is a flowchart that illustrates a logical flow of the classification derivation. At Step 301, the steps to be executed and their sequence are read from a configuration repository, such as a database or other device or mechanism to persistently store data. These steps are then executed in the order defined by said configuration. Step 303 groups the individual classification steps together as conceptual derivation process.

At Step 304 metadata is obtained for the document. The way in which this occurs depends on the metadata to be read; for example, this may entail a database query, a query to a directory service, a call to a web service, or any other technique permitting the gathering of specific data. Various sources of relevant metadata can be queried for the document, in order to obtain as many aspects of the creating environment of the document. Each metadata source query and interpretation represents one step of this process. The source information that is used to generate the classification may be the user's organizational role or function, the department of the user in the organization, and characteristics of the program, such as the package or suite of software that was used to generate the document being accessed. Sources of metadata for the user may include, for example, one or more of the following: the identity of the user, attributes of the user, such as organizational group or unit information, a directory service (such as Active Directory), an Identity Management application (such as SAP NetWeaver Identity Management) and/or authorizations and roles assigned to the user (e.g. Active Directory group memberships, SAP roles, profiles and activity groups). Additional metadata may include, for example, one or more of the following: the software program or application that produced the data, attributes of this program, including package, application component, and/or other available information, such as transaction code, database tables from which the data originates, SAP Logistics Classification System attributes. Other data sources, such as company-specific databases or repositories that may hold relevant information, may be integrated and used as well. Classification values from one or more properties may also be used to determine or influence the values of other data or values. The user or the user's organization may create a classification database that includes information about a list of users and organizational, functional, location, and other user characteristic information for use by the classification system. Thus, in addition to off-the-shelf applications that provide user information, the customer using the system may create its own metadata database. See, U.S. Patent Nos. 5265221; 5325294; 5347578; 5481613;5499293;5528516;5535383;5621889;5748890;5751909;5761288; 5797128;5911143;5925126;5949866;5978475;5987440;5991877;6014666; 6023765;6029160;6038563;6041349;6041411;6044401;6044466;6052688; 6055637;6064977;6073106;6073234;6073240;6073242;8600895.

At Step 305, the collected metadata is mapped to classification values. For example, this can occur with the aid of mapping tables held in a database or other device to persistently store data, or with any other mechanism suitable for mapping metadata to classification values (including, for example, scripts, algorithms, calls to external sources such as web services, etc.). The mapping should also express the reliability of the information gathered from the metadata, as further explained below.

At Step 306, the classification information thus gathered is merged with classification information collected by previously executed steps, if any, as further explained below. When all steps have been executed, the classification derivation process is complete.

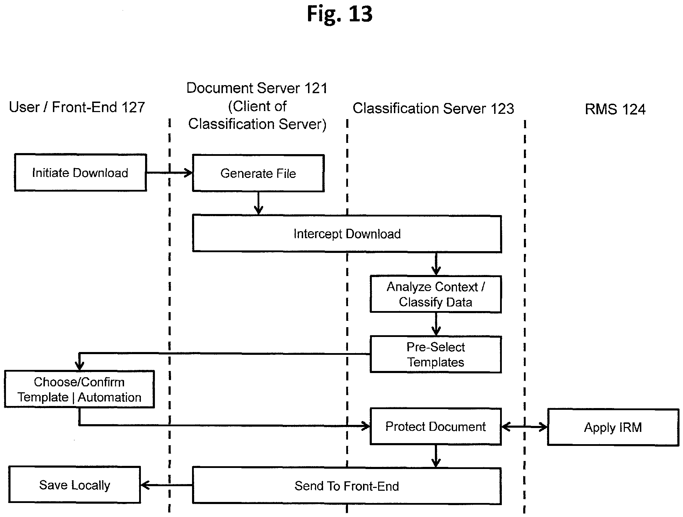

Aspects of a classification method as contemplated herein will now be explained with reference to Figs. 11 and 13.

As shown in Fig. 13, user at front end 127 initiates downloading or other type of accessing of the digital document from document server 121. Document server 121 generates a file as it ordinarily would, responsive to the user request for access. For example, document server 121 may be a SAP server or other type of server that provides a range of business documents to the user at a company. It will be understood that in the context of the present discussion, when the server is discussed, it may be understood as a bank of servers, distributed servers, cloud resources, virtual machine servers, or a data center that includes one or more firewalls, routers, proxy servers, databases and the like. Also, while discussed as two separate devices or groups of devices, document server 121 and classification server 123 may be implemented as a single device or a single group of integrated devices. Servers 121 and 123 may be provided as a single device or group of devices, or their functions may be merged and provided as single server.

After the file is generated responsive to the access request, this process is intercepted. For example, an addin module provided at document server 121 may work in concert with classification server 123 to intercept the attempt to access or to download the document. The addin at document server 121 may then initiate the classification process performed by classification server 123. Classification server 123 analyzes the user context and other metadata for the document, and propose the classification as discussed herein. Additionally, classification server 123 may request a user at front end 127 to confirm the classification or may request other input. Classification server 123 may then protect the document by applying a rights management from rights management server 124. For example, Microsoft's rights management products may be used and accessed using Microsoft Azure's platform. Protected in this way, the document may be sent to front end 127. User may then save or otherwise process the document according to the classification.

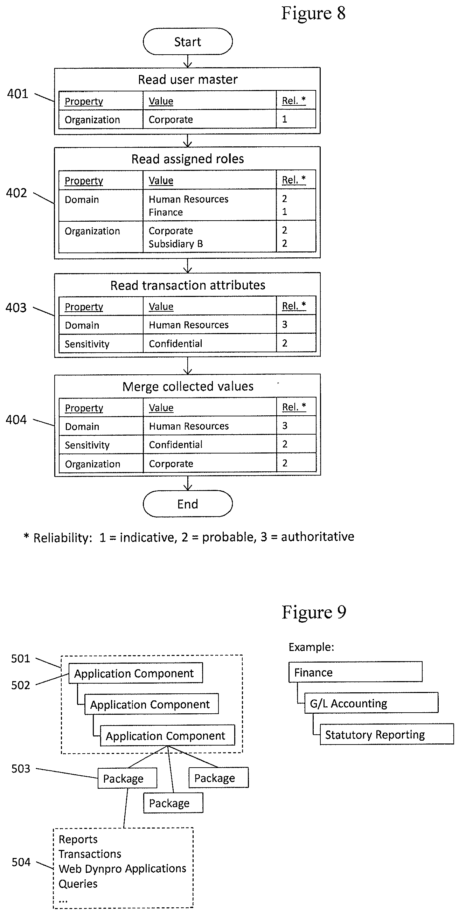

Figure 8 illustrates a derivation and mapping mechanism, using sample data to illustrate aspects of the classification process. At Step 401, attributes from the user master record are obtained from document server 121, from classification server 123 and/or from a connected identity management application. Depending on how the organization is structured, this may yield information of varying reliability. In this example, it is assumed that only an organizational assignment to a corporate function can be derived with a fair degree of certainty. In this example, for the property "organization," the value for the user is corporate. The reliability for this information may be set by default at 1.

More automated ways of determining user information may also be used. For example, a postal code obtained for the office address of the user or other location information may be used to guess at an organization or organizational unit of the user. If the postal code, such as a zip code, for the user is determined to be at a location at which or near which a particular organizational unit such as human resources, is located, then this could be provided as the organizational unit of the user.

At Step 402, the roles, authorizations, directory group memberships and/or similar organizational information for the user, are retrieved. In the example illustrated in Fig. 8, the user has a more general finance role, and a rather specific human resources role; this results in an indicative affiliation with finance and a probable association with human resources. At Step 403, the executed program is analyzed. For example, in SAP, this may be the transaction code or Web Dynpro application and the package or application component to which these belong as explained further in Figure 9. It is determined that the user is executing a report that can produce confidential human resources data (the organizational scope of the selected data may be inaccessible). Another system, external device, a batch job or other process, i.e. a non-human process, may also attempt to access or to download a digital document. In such a case, the executed program and its attributes, for example, report, query and/or queried database table(s), package, application hierarchy, database tables and the like, may be used as context data to generate the document classification. In the case of an SAP document, additional information from what is known as the "BusinessObjects Universe," a logical aggregation of database tables and their relationships, with the purpose of abstracting technical implementation details and related SQL logic from reports accessing this data, may be used. Context data from either the application program used to generate the digital program and/or the process attempting to access or to download the digital document may be used for generating the document classification.

Before continuing with the flowchart of Fig. 8, we now turn to Fig. 5. Figure 5 illustrates an exemplary classification structure or schema for a document for which values are determined according to the present disclosure. Numerals 101, 103 and 105 represent properties of the data, each with a predefined set of possible values, such that 102 enumerates the possible values for property 101, 104 enumerates the possible values for property 103, 106 lists the possible values for property 105). The number of properties, and the number and type of possible values, is not subject to any particular restriction.

Properties and value lists can either be flat, that is a list of alternative values without any particular relationship. Such a list may also be hierarchical, that is having a whole-vs.-part relationship, or incremental, that is having a growing importance or weight.

In the examples of Figure 5, the "Functional Domain" is an example of a flat list, in which all alternative values are of equal importance and significance; "Sensitivity" is an incremental list ("Internal" is more restrictive than "Public", "Confidential" is more restrictive than "Internal", etc.).By way of contrast, the "Organization" is a typical example of a hierarchical value list: "Corporate" is the sum of all subordinate entities, called "Subsidiary A, "Subsidiary B" and "Subsidiary C" in the example. Functionally, this difference is important for two reasons:

If classification is to occur via a user interface, this relationship can guide the user; and
When merging conflicting values from various sources, the hierarchy level can be used as a conflict solver, so that the hierarchically higher value prevails.

An example of this is depicted in Figure 8. At 404 the outcomes of the previous steps are combined. Every source of metadata can be quantified as to its reliability: for example, a general default value may not very reliable, whereas the database table from which the data originates has a much higher degree of reliability or certainty as to the functional domain or sensitivity level of the data. As a result, a value with a higher degree of reliability will override a value with a lesser degree.

If for the same property differing values were collected--in the example of Fig. 8, for the property "domain," "human resources" and "finance" conflicting values were collected, the one with the highest reliability indicator prevails. If a conflict is still to be found (in this case, for property "Organization" the values "Corporate" and "Subsidiary B" were determined with the same reliability), the hierarchically higher value prevails; in this case, this is "Corporate." Such merging of derived values can either occur after each derivation step, or at the end of the process.

If a conflict between values remains, that is two or more values are obtained with equal reliability for the same property, this can be solved in various ways if this is non-hierarchical:
By defining a general default, which will be applied in such cases; or
By showing a user interface to the user, asking him/her to select between the found values (either showing the full value list, or restricted to only the values the system determined).

The classification of a document can be used to derive the corresponding IRM mechanism in various ways. IRM systems typically use policies or templates that define the group of persons who have specific access rights (for example, read, print, edit, copy, send by mail) to documents protected with such policies or templates. Protection may be implemented by encrypting the document and embedding into it the policy with which it needs to comply, so that only authorized users are able to access the document.

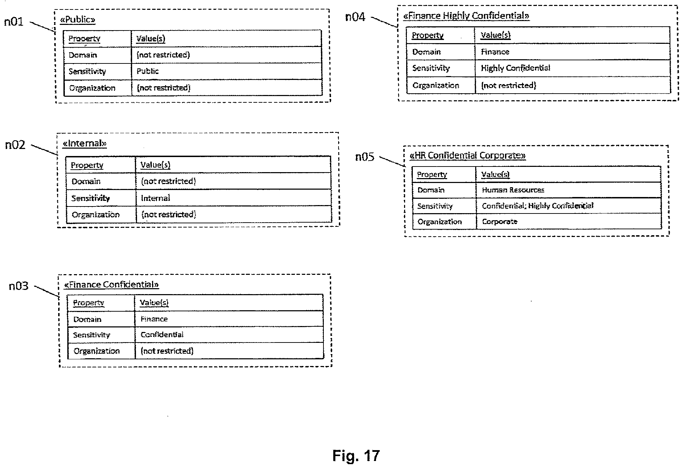

Selection of the IRM policy to be applied to a document can be automated by means of classification. This is achieved by assigning to the IRM policies the classification values for which they are applicable. An example illustrated in Fig.17 shows an implementation.

Documents classified as "Sensitivity = Public", regardless of domain and organization, may be assigned to IRM policy "Public", as shown at n01.

Documents classified as "Sensitivity = Internal", regardless of domain and organization, may be assigned to IRM policy "Internal", as shown at n02.

Documents classified as "Domain = Finance; Sensitivity = Confidential", regardless of the organization they belong to, may be assigned to IRM policy "Finance Confidential", as shown at n03.

Documents classified as "Domain = Finance; Sensitivity = Highly Confidential", regardless of the organization they belong to, will be assigned to IRM policy "Finance Confidential", as shown at n04.

Documents classified as "Domain = Human Resources; Sensitivity = Confidential; Organization = Corporate", or "Domain = Human Resources; Sensitivity = Highly Confidential; Organization = Corporate", may be assigned to IRM policy "HR Confidential Corporate", as shown at n05.

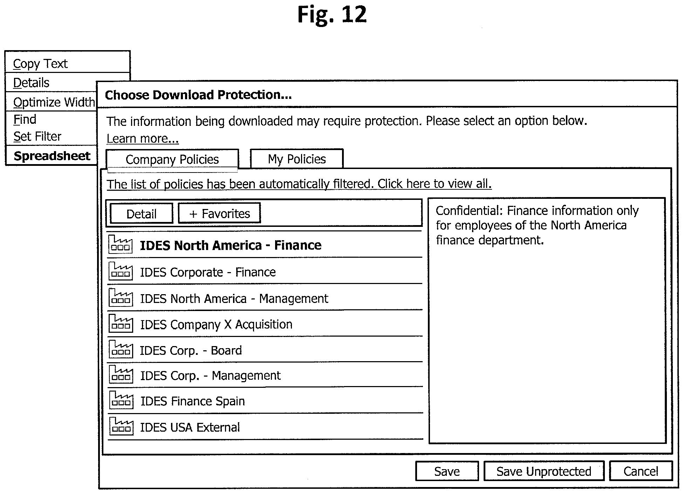

According to an aspect of the disclosure, every possible classification can be mapped to a suitable rights management policy. According to another aspect of the disclosure, if a policy cannot be determined, a dialog can be shown to the user, displaying the best-matching policies that may be applied (as illustrated, for example, in Figure 12. In the alternative, a default or fallback rights management policy may be defined, which can be applied in such cases. As a further alternative, such a download may be blocked.

Based on a document's classification, an archiving system may deduce, for example: whether a document must be or should be or may be archived perennially or permanently or indefinitely, or can be disposed of after a defined period-this may have application, for example, in regulated environments, such as companies subject to government drug or medicine (e.g. FDA) regulations, health, clinical, medical or physician's services sector, military or defense, banking and financial sector; and/or whether a document must be or should be or may be stored in a particularly secured storage location (e.g. to enforce special authentication mechanisms for access to highly critical content).

Figure 9 shows an example of SAP's application hierarchy by way of an example of using programming application information for classification. The hierarchy (501) establishes a logical, hierarchical relationship between the various application components of the overall application. The application components (502) represent a logical grouping of programming objects dedicated to a particular business function. The packages (503) technically group programming objects; every programming object must belong to exactly one package. All programming objects (504) executable by the user (reports, transactions, queries, etc.) therefore may belong to a defined place in the application hierarchy.

Fig. 10 illustrates aspects of the digital document classifier 130 according to an aspect of the present disclosure. Document access listener 131, for example, may be located at document server and may identify an attempt to access a document as discussed herein. User identifier 122 obtains information regarding the identity of the user to be used in classification of the digital document as discussed herein. User information retriever 133 obtains information regarding user characteristics based on user identity. This may include, but not limited to information about the organizational unit of the user and the function or functions performed by the user, user permissions, user's groups, users physical location and other such information, and may also include customer specific user information sources. Document Context Analyzer 137 determines meta data for the document. This may contain, but is not limited to hierarchy and type of origin applications, time of creation, file name, data source tables, data source database, location of file creation, creation server, destination system and others, Context Analyzer may also allow for customer specific data sources. User input processing 151 may prompt the user to enter information about the user, about the document, about the user's organization or organizational unit. Document attribute assignor 139 attaches the user and context information to the document for further processing.

User information retriever 133 obtains information regarding a user characteristic based on user identity. User identifier 134 and user function identifier 135 retrieves or otherwise obtains information about the organizational unit of the user and the function or functions performed by the user. Document origin determiner 137 determines meta data for the document. Application/package analyzer 138 determines a software application or suite of programs associated with the creation of the document. Document assigner 139 assigns a document attribute based on the meta data collected. User input processing 151 may prompt the user to enter information about the user, about the document, about the user's organization or organizational unit and/or may request that the user confirm that the classification for the document.

Information reliability assigner 153 shown in Fig. 10 provides a ranking for the reliability or certainty of the information for the user and document obtained, as discussed above. Weighting module 154 then weights the information in accordance with the reliability. Document classifier 155 merges this information and produces a document classification. Document manager 156 to digital rights management/data loss prevention interface 150 manages rights for the document according to the classification generated. For example, this may be done by encoding the document and allowing access according to the classification scheme. Archiving manager 157 stores or moves or shares or copies the document in accordance with archiving scheme according to the document classification. User input processing 151 may prompts the user for acceptance, enhancement or correction of the classification.

According to an aspect of the disclosure, content information obtained from the document may also be used to generate a classification for the document in combination with the context data described herein.

It will be understood that some of the foregoing types of data or information, such as GPS location may be provided, for example, from a smartphone or the like being used for the cut/copy and paste action, and some of the information may be obtained from, or may be corroborated or verified by, one or more sources external to the source/destination document, to the operating system, to the host device on which the action is being performed and/or to the local network.

Information such as a user name and other user information may be helpful to identify the user as belonging to a particular group, for example, an employee of a company or a division or unit within a particular company. Device or LAN location information about where the action is being performed, such as IP address, GPS location and the like, may be helpful in determining whether the cut/copy and paste action is taking place at a known office or premises of a company or organization. If it is not taking place at such a known location, it may raise a red flag, or at least provide some indication, that the action is not authorized. Also, a company or person or group may provide a list of authorized locations at which such a document may be accessed and/or cut/copied and pasted and restrict such actions elsewhere. Similarly, the system information, such as an operating system version or type may provide an indication as to whether it is the type of system that the company generally uses or, more specifically, the class of persons to whom accessed and/or cut/copy and paste actions are permitted uses.

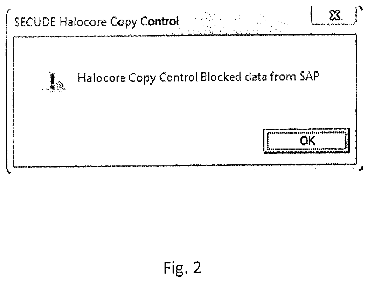

In addition, a combination of pieces of information about the application, system, network, device, or document from which the text or other clipboard content originates and about the destination application or document (to which the text or other clipboard content is to be pasted) may also be considered as a basis for a control decision. A control decision may mean a decision to allow or to disallow a cut/copy action and/or a paste action, and/or to limit, to filter, to modify, to log, and to audit a cut/copy action and/or paste action, or to perform more than one of the foregoing. For example, the application that is a source may be an internet browser, such as Firefox, however the context of the source may be a confidential internal website that is being accessed by the browser. Also, the destination may be a body of an e-mail of a browser accessing a personal account of the user. The processing utilizes all or some of the captured information to decide whether an action such as cut/copy or paste, or whether both actions cut/copy or paste, are to be blocked, or otherwise controlled, audited, logged and recorded. Rule determiner 30 illustrated in Fig. 4 may determine the applicable rule to be applied and invoke one or more of the appropriate action modules illustrated in Fig. 4, for example, action interceptor 31 may be invoked when the cut/copy action and/or paste action is to be blocked or altered; action logger 32 may be invoked when the cut/copy action and/or paste action, the content of the clipboard or other information is to logged or archived; and intercept messager 33 may be invoked when the user is to be provided with a message, for example, the message illustrated in Fig. 2 or some other message explaining why the cut/copy action and/or paste action is being blocked or filtered.

Rules may be implemented in a one line implementation or in more complex mechanisms. If the rule defined is matched, then the application may report, control and or block the attempt to cut/copy and/or paste action. An algorithm may also be used to calculate the potential level of risk per cut/copy and/or paste action.

A number of different ways are contemplated to flag a cut/copy action and/or a paste action as being suspect. A designated user, such as a systems administrator, can set the rules or select a subset of a list of rules that trigger the blocking/alerting/reporting functionality. The rules may be set for an organization or company, a unit or division of an organization, for a class or type or group of users throughout an organization, or for one or more individual users. The rules may be stored remotely and/or locally on the host system. Similarly, the interpretation or execution of the rules may be performed on the host locally or may be performed via a network, such as a local area network (LAN) connected with the host. A rule may name the source executable name, the destination executable name, an amount of bytes allowed to be copied to a Clipboard and whether an alert, a block and/or a report needs to be generated based on the rule. The rules might use any collected information or a combination of the collected information as a potential basis for decision of classifying and identifying an action as being suspect.

For example, sapgui.exe may be designated as a source, and Firefox.exe may be a destination. The amount of bytes allowed may be zero, and the action it be taken may be alert, block and report. When, based on the collected information, such a cut/copy and paste action command from a user is detected, the action is to be blocked, an alert may be displayed or otherwise provided to the user, as illustrated in Figure 2. A report may be sent and/or archived, the report including various types of information about the cut/copy action and/or the paste action. The report may include, for example, the source and destination executable names, the amount of bytes of content for which copying was attempted, the action taken, and the like.

Another approach is to provide a whitelist of types of actions that are allowed without an alert/block and/or report action being taken. For example, if the source and destination executable are both on the whitelist, then the action will be permitted. In addition, a whitelist may designate just the source or just the destination. That is, all cut/ copy and/or paste actions with such sources, and/or all cut/copy and/or paste actions with such a destination may be allowed.

Another approach is to specify the amount of risk to the applications in use. For example, the risk might be decided separately for each input and output action and / or might be decided separately for specific sub functions of the application (e.g based on URL, application context). In such a scenario high risk input (source) applications are web browsers, as they potentially could lead to data being copied to external sites. High value output (destination) applications are core business applications where for example the intellectual property of the company resides. Cut/copy and paste filter 20 now decides upon the level of combined risk of both the input and the output applications, or decided based on the individual risk factor whether certain action might be logged or blocked. Cut/copy and paste filter 20 may use any other given information to decide upon the level of risk. For example, location of the user attempting cut/copy and paste, or a location of an office or organizational structure associated with the user, or a location in a database or of database of an input application or of the output application, might influence the decision to block any copy action altogether.

The whitelist may also be based on the location of the user and/or based on the other types of information above-described. For example, the source or destination application type or name may be whitelisted. Or, the cut/copy and/or paste might be allowed if the machine from which the user can use the cut/copy and/or paste command is located at a particular address or area of the organization or, the user belongs to or is associated with a particular branch or division of the organization, and/or if a particular user has a particular status or title within the organization, or the like.

Similarly, a blacklist may be used, in which all cut/copy and/or paste actions that have a particular source, a particular destination, a particular user, a particular location for a device or other such factor are disallowed, that is they are blocked, and/or reported to a log or other device and/or are notified to the user.

A scripting approach using a scripting language to define rules is also contemplated. A script may define, for example, four outcomes, including block, alert, report (or a combination of the foregoing), and do nothing. Then, based upon execution of the process, the information, such as the context information for the cut/copy and/or paste action is collected and interpreted with the definitions in the script, thus yielding one of the four actions: paste, block, alert, report, do nothing. All of the types of information described herein previously maybe used to formulate different rules, based on a scripting or programming language to configure the necessary actions.

A company may have high value data stored in applications that are accessible by users. Such data may be accessed by users and/or may be updated or changed by users but may not be exported at any form from the application. For example, copying a selected text from SAP to the web, the system may identify that the data to be copied is from SAP, and the system may block the cut/copy and/or the paste action. For example, for bill of material with high informational value for the organization alteration by the user may be permitted, but cut/copy and paste is not. //web might also include some other things.

In addition, the system may report the attempted cut/copy and/or the paste to a human or automated interface an attempt to copy data from an internal financial report to an e-mail. A system may identify that the data comes from a financial report, based, for example, on the name of the application and document title. Similarly, the system may identify the attempted paste is to an e-mail identified, for example, by the type of application. Such an action may be reported and/or blocked.

The system may identify attempted copying from a sensitive internal website. The system may detect, based, for example, on the URL including block and report such an attempt. The system may identify an attempt to copy from Word to Excel. The system may identify the source as Word and the destination as Excel. For generic work, no reaction or blocking/reporting may be necessary. The system may identify an attempt to copy/cut data from a URL that is not ordinarily or typically visited, from a country not normally visited or which the company has no typical dealings, or at least not visited or dealt with by this user or this user's department or organization. Based on the IP address, and/or an associated GPS location, the country of the source may be identified and the cut/copy action and/or the block action may be blocked and reported. While referred herein sometimes as a text that is cut/copied and/or pasted, it will be understood that such clipboard content may include images, photos, URLs, video or audio information, encoded files, software code, spreadsheet with numerical information, lists, machine readable code, computer aided design elements, and many other types of information, or a combination of more than one of the foregoing.

Reactions to suspicious cut/copy or paste actions may range from no action in case of a harmless action, to blocking of the cut/copy and paste action, to blocking of the cut/copy and paste action and notification to a human operator and/or an automated interface. For example, sensitive data may be identified and redacted while other data may be allowed to be cut/copy and pasted. In some cases, the system may deem it sufficient to block and/or otherwise control and/or limit and/or alter and/or notify someone regarding the paste action, while in other cases the system may block and/or otherwise control and/or limit and/or alter and/or notify someone regarding the cut/copy action to the clipboard, while in yet other cases the system may block and/or otherwise control and/or limit and/or alter and/or notify someone regarding both the cut/copy and the paste action. Also, as part of the altering of the action, the data that is cut/copied to the clipboard and/or the data that is pasted into the destination document, application or target may be replaced by non-sensitive data, for example, a warning that the cut/copy and/or paste action is not permitted. Fig. 2 illustrates such warning message to a user.

Some or all of the collected information about the source and destination documents, systems, devices, and/or applications, as well as the text or clipboard content that was blocked or controlled may be logged or recorded entirely for later auditing. Such information may also be used to improve the process logic as part of machine learning mode. In the machine learning mode, the system may monitor cut/copy and/or paste actions of a user over a period of time and "learn" what normal cut/copy and/or paste actions of the user comprise. That is, the type of information discussed above with respect to the cut/copy and/or paste actions would be remembered for each cut/copy and/or paste action commanded by a user. Each piece of such information, for example, source document of application type X, could be assigned a score according to the frequency of its occurrence in a series of cut/copy and/or paste actions. Their frequent occurrences may indicate a usual pattern of user behavior. The sensitivity or risk level of the source application as well as the sensitivity or risk associate with the destination application might also influence the decision. Then, once the "normal" operations of the user are acquired, future cut/copy and/or paste actions would be judged according to the normal range of cut/copy are paste behaviors that is established for the user. In the alternative, the normal can be established for an organization, a divisional organization, instead of users, or the like. Therefore, cut/copy and/or paste actions that are deemed anomalous, statistically infrequent or unusual, or irregular would then be blocked, reported or a combination of the foregoing. In this way, an algorithm would, in essence, define the rules for reporting, blocking or a combination of the foregoing.

The process data may also be used with third party systems to process the data in other ways. For example, the report may include information that is reported or forwarded to an SIEM (Security Information in Event Management) system so that users who initiate anomalous, unusual or aberrant behavior or exhibits a pattern of anomalous behavior over time with respect to cut/copy and/or past actions, can be detected and potentially blocked. Such users may flag a wider organizational threat or a threat to the information system. Also, such information may also be used to analyze the most cut/copied applications and/or documents and/or clipboarded portions thereof. Additional ways of analyzing such reported data are also contemplated.

Many different examples on how the individual parts of the innovation can be implemented have been given. It is clear that there are more combinations or variations possible, leading to the same result. For example, static rules may be enhanced with machine learning algorithms, and over time use of such an algorithm may improve the static rules in unknown cases. In addition, on or more of the previously mentioned mechanism can be combined in several different ways. All these combinations work on the information collected about the copy / paste / cut action and the surrounding system environment. The cut/copy and paste filter 20 might be implemented as part of an operating system service, or as a stand-alone application or utility, or as part of some other utility software. It might be implemented as part of an operating system, window manager or system level component.

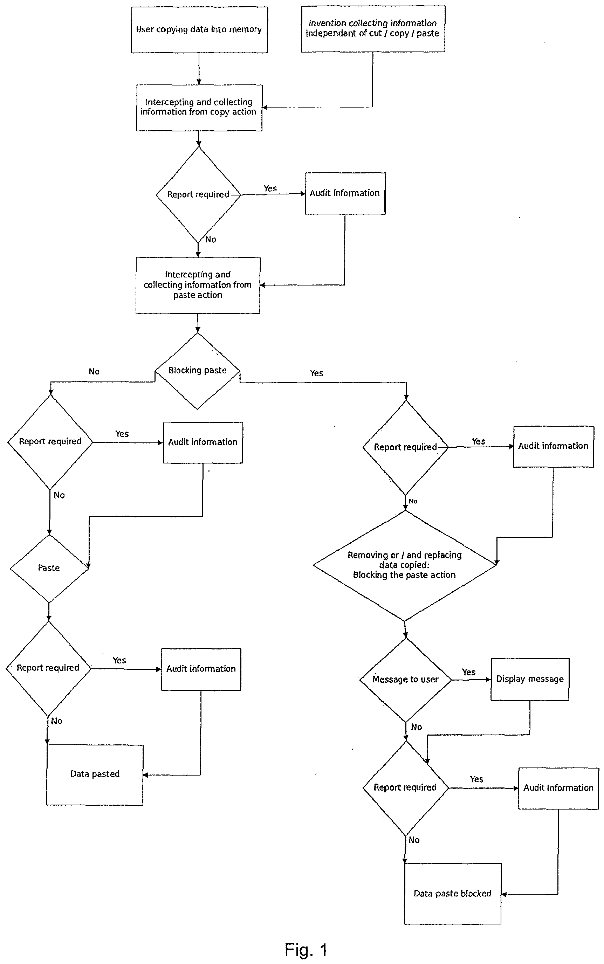

Fig. 1 is an example of a flowchart for a system according to the present disclosure. This system can be implemented in many different variations, including variations that entail only some of the actions enumerated. According to an aspect of the disclosure, reports do not always send all previous information but only the additional collected information since the previous report.

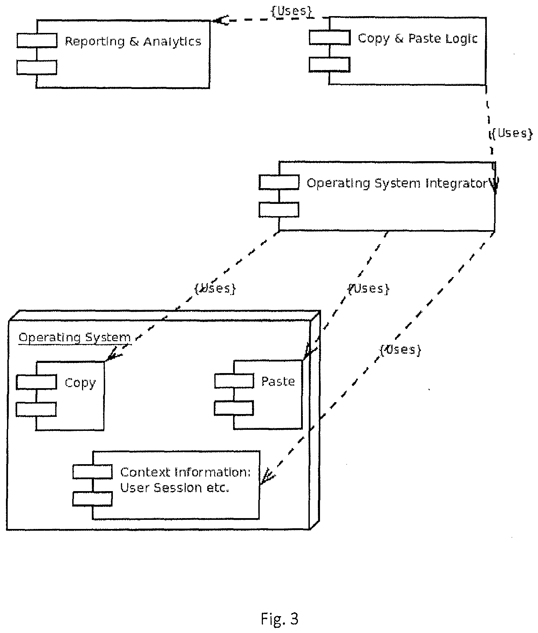

At S1, the user copies data into memory, such as a clipboard provided by an operating system of a host computer system that the system user is accessing. This action may be monitored by command listener 21 of Cut/copy action and paste filter 20 illustrated in Fig. 4. For example, as illustrated in Fig. 3, OS integrator 39 may interact with, or may be embedded as part of the operating system of the host or may interact with or may be embedded as part of a clipboard manager application of the operating system and the operating system may notify of any cut/copy action and/or paste action. One or more or all of the components of cut/copy and paste filter 20 may be thought of as being part of copy and paste logic shown in Fig. 3.

Previous to this action at step S2a components such as system information analyzer, location determiner, date / time analyzer may collect their information to support subsequent decisions regarding the copy / paste action. Such information may contain the current location of the device in use, the date, the operating system version and name, the host name and the like. Such information may be shared among several executions of the presented invention. According to an aspect of the disclosure, such information may be collected with every new copy interception.

At S2, additional information specific to the copy / cut action may be collected. Such information may include application context, amount of data copied, type of data copied, source application name, source application type and the like. This may be done through a clipboard content analyzer, it may also further analyze the data copied for certain keywords or other means. Depending upon the implementation the data could also be removed from memory here.

At S3, it is determined whether a report at this stage is required according to the rules for such cut/copy and paste actions. This determination may be done through rule determiner and analytics component. It might be based on all or parts of the information previously collected and the rules defined, which indicate whether with the collected information at the execution point a report required. The report itself may then be sent to external systems or locally processed.

For example, a decision about whether to report an attempted cut/copy and/or paste action may be based on information, such as the source (source application, source context), the destination (the destination application, title of the destination), the user group of the user attempting the action, and the location of the user or location of the user group. By way of illustration, when an action, such as a copy action, for example, designated as OnCopy is detected, then an action may be generated if a rule is satisfied. For example, a rule may be defined as action, source, destination, usergroup, location OnCopy, report, https://sensitive.company.internal/finance/, *, Account Managers, Germany

Then, as an action with the following attributes is identified:
Source = iexplorer.exe
Source_context = https://sensitive.company.internal/finance/BigCustomer
destination = Word.exe
destination_title = Document1.docx
Location = USA
UserGroups = Account Managers, USA, Detroit Branch

This may not trigger a reporting action, since the decision would be to do nothing. This is because the location of the user group is detected as USA, Detroit Branch. However, if the same user action would be attempted in Germany, a reporting action would be triggered.

As discussed, the Windows operating system allows listening for copy attempts using standard software development kit functionality. Other operating systems allow this in other ways, as described above. In some cases, a developer may have to hook into such functionality by changing the default code/binary or developing a driver. Thus, for both reporting decisions and for cut/copy action and/or paste action decisions the system may gather information in a variety of ways, or a combination of such ways. 1) Information about the session spanning some period of time, such as user name, system name and the like may be collected. Information may then stay static over several attempts of cut/copy and/or paste. Such information may also be refreshed after a period of time. 2) Information may be collected regarding the specific cut/copy and/or paste action, such as the source application, title of the document, source context or the like and other information, such as the type of information actually copied, the size or the bytes of data that are copied, or the like. 3) Information may be collected that concerns the paste action, such as the destination application, application context, application executable name, or the like. Following each collection step, such data may be aggregated so that it may be understood by the steps subsequently. Such information may be transformed or stored as part of a data structure defined by the system. Such data structures may comprise name, value pairs, lists, trees or any other known format for software-processable structures. Fig. 1 illustrates several reporting decisions, which may be made at various parts of the processing. As is noted in Fig. 1, a report may be generated even if the paste action is allowed. Also, a message may be generated to the user reporting or notifying the user that the cut/copy and/or paste action attempt has been blocked.

At S5, a component like the command listener may identify the user executing the paste action. Due to this action, components like document information analyzer, clipboard content analyzer, application information analyzer and the like may collect additional information relating to the paste action. This may be destination application name, destination application type, destination application context and the like. The data will not be pasted at this point.

At the next step all previously collected information and a combination / interpretation of them may be used as dataset for the decision making. Many ways of implementation might be used to determine the decision. A rule determiner in combination with an analytics component may be used to check the dataset against static rules, and then against scripted rules. The decision will be either to block the paste action or to allow the paste action.

As a subsequent step the decision may be reported (again) if the rules say so. The report may include the user name, the source and destination documents, some or all of the information collected regarding the cut/copy and/or paste actions as discussed above, the information regarding the cut/copy and/or paste actions that was in the rule applied to determine whether the cut/copy and/or paste action is to be controlled, the particular rule that was invoked to generate the report, the time/date/place of the action, the text or other clipboard content that was cut/copied, and the like.

After such a report having been sent if the paste action is allowed, the data will be pasted to the destination the user selected. The process in that might be concluded with a final report that may summarized the action or may conclude the previous reports.

On the other hand, if the paste has to be blocked, the data in the clipboard may be replaced with a warning message or it may be flushed from the clipboard or otherwise made unavailable for the paste action. If configured to do so, the process may be concluded by sending a warning message to the user and / or a final report to conclude or enhance the previous reports.

At S4, if the action or actions is/are to be reported then this information is sent to a log where the information can be later audited. The report may include the user name, the source and destination documents, some or all of the information collected regarding the cut/copy and/or paste actions as discussed above, the information regarding the cut/copy and/or paste actions that was in the rule applied to determine whether the cut/copy and/or paste action is to be controlled, the particular rule that was invoked to generate the report, the time/date/place of the action, the text or other clipboard content that was cut/copied, and the like.

Thus provided is a technical solution to a technical problem. The technical problem is the ease of copying, changing and transmitting a wealth of proprietary information available for a company or organization and the lack of sufficient content that may be available from the document itself for identifying a sensitivity of the document. A technical solution is the use of metadata obtained for the user and/or for the document automatically, the automatic reliability estimation for such information obtained, the automatic merger of such metadata and the automatic classification of the document and management in accordance with the classification.

Described herein is a method, non-transitory computer-readable medium product incorporating a program of instructions, means for, device, and system that controls cut/copy and/or paste actions, typically using a software clipboard of a local host. The computer-readable medium may include instruction configured as software, hardware, or firmware, for example, one or more or all of the Cut/copy action and paste filter 20 illustrated in Fig 4, and/or operating system integrator 39 or one or more functions provided thereby, or any component that provides one or more of the functionalities, or any portion of a functionality, described herein. The means for may be any component that provides one or more of the functionalities, or any portion of a functionality, described herein. A device may be a device that includes or executes such software, hardware or firmware. A computer system may include one or more processors in one or more physical units that includes such a device, or that performs such a method, or that executes the computer-readable medium, according to the present disclosure. Further, these computers or processors, including the Cut/copy action and paste filter 20 or components thereof, and/or operating system integrator 39 or one or more functions provided thereby, may be located in a cloud or offsite or may be provided in local enterprise setting or off premises at a third-party contractor site, and may communicate with an operating system or with a cut/copy and paste function-providing application using a wired or wireless data link. Cut/copy and paste filter 20 may be integrated with or may have as a component thereof operating system integrator 39 or functions provided thereby, or may communicate with operating system integrator 39 or functions provided thereby by wired or wireless data link. One or more component of the device generation engine may be provided as software on a processor-readable medium, such as a hard drive, optical disk, memory stick, flash memory, downloadable code stored in random access memory, or the like, may be encoded as hardware, or may be provided as part of a system, such as a server computer.

Cut/copy action and paste filter 20 and/or operating system integrator 39 or functions provided thereby, may be provided as part of a server, cloud-based resource, desktop, laptop computer, handheld device, tablet, smartphone and the administrator can interact therewith via various types of data processors, including handheld devices, mobile telephones, smart phones, tablets or other types of other communication devices and systems. Various types of memory may be provided in the computer for storing the information, including random access memory, secondary memory, EPROM, PROM (programmable read-only memory), removable storage units, or a combination of the foregoing. In addition, the communication interface between the major components of the system, or between components of the cut/copy and paste filter 20, can include a wired or wireless interface communicating over TCP/IP or via other types of protocols, and may communicate via a wired, cable, fiber optics, line, a telephone line, a cellular link, a satellite link, a radio frequency link, such as a Wi-Fi or Bluetooth, LAN, WAN, VPN, the World Wide Web, the Internet, or other such communication channels or networks or a combination of the foregoing.

Although the present invention has been described in relation to particular embodiments thereof, many other variations, and modifications and other uses will become apparent to those skilled in the art. Combinations and sequences of steps may be performed in other sequences not specifically enumerated. Steps outlined in sequence need not necessarily be performed in sequence, not all steps need necessarily be executed and other intervening steps may be inserted. Features described with respect to one embodiment or implementation described herein may be freely used in or combined with other embodiments and implementations. It is preferred, therefore, that the present invention be limited not by the specific disclosure herein.

## Claims

1. A copy action controller comprising:
a command detector configured to detect an automated processor-implemented copy action in response to a user command received by a computer system, the copy action comprising at least one of a cut action from a source, a copy action from the source, and a paste action to a destination;
a rule applicability determiner configured to determine, based on a first information comprising at least one of the source and the destination, whether the copy action satisfies a rule controlling the user action; and
an action implementer configured to perform at least one of blocking the copy action and transmitting a report of the copy action to an action log, in accordance with the rule.

2. The copy action controller of claim 1, wherein the copy action comprises both the cut or copy action of content from the source and storing of the content to an automated processor storage location.

3. The copy action controller of claim 1, wherein the automated processor storage location is a clipboard of a local host.

4. The copy action controller of claim 1, wherein the rule is pre-set by a human system administrator.

5. The copy action controller of claim 1, wherein the blocking comprises at least one of preventing storing of the content to an automated processor storage location of a local host processor and preventing storing of the content to the destination.

6. The copy action controller of claim 1, wherein the action implementer performs the blocking and the transmitting of the report of the copy action.

7. The copy action controller of claim 1, wherein the blocking comprises preventing storing of the content to an automated processor storage of a local host processor, and the action implementer transmits, via a data network, the report of the copy action to an action log located on an automated processor remote from the local host processor.

8. The copy action controller of claim 1, wherein the blocking further comprises notifying a user initiating the user command of the blocking.

9. The copy action controller of claim 1, wherein the determiner is configured to determine, based on the first information and based on second information comprising user information, whether the copy action satisfies the rule controlling the user action.

10. The copy action controller of claim 1, wherein the rule applicability determiner is configured to determine, based on the first information and based on second information comprising at least one of user location and user device location, whether the copy action satisfies the rule controlling the user action.

11. The copy action controller of claim 1, wherein the rule applicability determiner is configured to determine, based on the first information and based on second information comprising content size, whether the copy action satisfies the rule controlling the user action.

12. The copy action controller of claim 1, wherein the rule applicability determiner is configured to determine, based on the first information and based on second information comprising at least one of date and time information of the user command, whether the copy action satisfies the rule controlling the user action.

13. The copy action controller of claim 1, wherein the source and destination are determined with reference to at least a portion of a file identifier or file name.

14. The copy action controller of claim 1, wherein the source and the destination are each at least one of a document, a file and a website.

15. The copy action controller of claim 1, further comprising:
an information analyzer configured to determine recurrence information for information associated with a plurality of learning copy actions in response to a plurality of user commands, each learning copy action comprising at least one of the cut action from the source, the copy action from the source, and the paste action to the destination; and
a rule generator configured to generate the rule based on the recurrence information determined,
wherein the rule applicability determiner is configured to determine whether the copy action satisfies the rule based on the rule generated.

16. The copy action controller of claim 15, wherein the rule generator is configured to generate the rule such that when the recurrence information indicates low recurrence of the information associated then the rule yields the at least one of the blocking of the copy action and the reporting of the copy action by the action implementer.
